Europäisches Patentamt

European Patent Office

Office européen des brevets

(19)

(11) EP 0 603 070 B1

(12) FASCICULE DE BREVET EUROPEEN

(45) Date de publication et mention
de la délivrance du brevet:
**06.10.1999 Bulletin 1999/40**

(51) Int Cl.$^6$: **G06F 17/15**, G06G 7/19

(21) Numéro de dépôt: **93403037.0**

(22) Date de dépôt: **15.12.1993**

(54) **Procédé et dispositif pour la convolution analogique d'images**

Verfahren und Vorrichtung zur analogen Bildfaltung

Method and apparatus for analog image-convolution

(84) Etats contractants désignés:
**DE GB**

(30) Priorité: **15.12.1992 FR 9215093**

(43) Date de publication de la demande:
**22.06.1994 Bulletin 1994/25**

(73) Titulaires:
• **FRANCE TELECOM**
  **75015 Paris (FR)**
• **CENTRE NATIONAL DE**
  **LA RECHERCHE SCIENTIFIQUE**
  **75794 Paris Cédex 16 (FR)**

(72) Inventeurs:
• **Ni, Yang**
  **F-91940 Les Ulis (FR)**
• **Devos, Francis**
  **F-91620 La Ville du Bois (FR)**

(74) Mandataire: **Martin, Jean-Jacques**
  **Cabinet REGIMBEAU**
  **26, Avenue Kléber**
  **75116 Paris (FR)**

(56) Documents cités:
**FR-A- 2 656 185          US-A- 4 555 770**
**US-A- 4 956 564**

• **IEEE PROCEEDINGS ON THE INTERNATIONAL**
  **SYMPOSIUM ON CIRCUITS AND SYSTEMS**
  **vol.2, June 1988, ESPOO, FIN, page 1217-20**
  **BERNARD ET AL 'Design of a half-toning**
  **integrated circuit based on analog quadratic**
  **minimization by non linear multistage switched**
  **capacitor network'**

## Description

La présente invention concerne d'une façon générale la convolution d'images, et concerne en particulier un nouveau procédé récursif permettant de réaliser par itérations successives une convolution analogique d'une image représentée par une pluralité de tensions analogiques délivrées par une pluralité de capteurs élémentaires disposés en réseau, avec une réponse impulsionnelle de type gaussien.

Le filtrage gaussien d'images présente de nombreuses applications pratiques, notamment dans le domaine de la vision artificielle.

Un tel filtrage présente en effet un certain nombre de propriétés mathématiques intéressantes telles qu'une localité spatio-temporelle optimale et la scalabilité.

Pour davantage de détails quant au filtrage gaussien, on se reportera à l'ouvrage de D. Marr "Vision", Editions Freeman, San Francisco, Etats-Unis d'Amérique, 1982.

Une méthode qui vient à l'esprit de l'homme de l'art pour réaliser un tel filtrage gaussien consiste à effectuer une conversion analogique/numérique sur les différentes tensions élémentaires des capteurs d'image, puis à appliquer sur les tensions mémorisées un noyau de convolution gaussien, par calcul numérique. Un tel traitement numérique est cependant extrêmement long, et en aucun cas compatible avec un traitement d'images animées en temps réel.

Pour pallier cet inconvénient des solutions numériques, on a déjà tenté de réaliser un filtrage gaussien de type analogique en parallèle sur les tensions des capteurs elles-mêmes.

Une première solution connue de ce type consiste à implanter, en association avec un réseau notamment bidimensionnel de capteurs, un réseau résistif, chaque résistance reliant deux noeuds adjacents du réseau de capteurs selon chaque direction du réseau. Le document "Robot Vision", B. K. P. Horn, Editions MIT Press, Cambridge, MA, Etats-Unis d'Amérique, 1986 enseigne un réseau résistif de ce type.

Cependant, un tel filtre résistif fournit une réponse de type exponentiel, qui s'avère mal adaptée à certains problèmes de la vision de bas niveau. En particulier, la réponse impulsionnelle montre un pic central, non dérivable, qui limite les traitements en aval.

D'autres auteurs ont proposé une mise en cascade de plusieurs réseaux résistifs, en vue d'obtenir une réponse s'approchant plus ou moins d'une gaussienne. Cette méthode est cependant difficile à mettre en pratique, car elle exige des composants analogiques, notamment amplificateurs, de spécifications extrêmement étroites.

Une autre technique connue consiste à utiliser en association avec un réseau de capteurs analogiques un réseau RC, où les tensions accumulées dans les capteurs sont appliquées aux bornes de condensateurs et où des résistances relient les noeuds adjacents dans la ou les directions du réseau. La thèse de T. Knight "Design of an integrated optical sensor with on-chip preprocessing", PhD. Thesis, Department of Electrical Eng. and Computer Science, MIT, Cambridge, MA, Etats-Unis d'Amérique, enseigne un filtre de ce type.

Le problème de ce circuit connu réside en ce que la variance du noyau gaussien obtenu croît extrêmement rapidement, du fait que les valeurs des résistances, réalisées sur substrat semi-conducteur, sont nécessairement faibles. Ainsi, pour obtenir une réponse gaussienne satisfaisante (de variance suffisamment faible et précisément déterminée), il est nécessaire de réaliser l'échantillonnage des tensions sur le réseau après l'écoulement d'une courte durée extrêmement précise, ce qui s'avère difficile à réaliser dans la pratique.

Enfin une autre solution connue dans le domaine des convolueurs analogiques réside dans un convolueur binomial, tel que décrit notamment dans le document de C. Koch, "An Introduction to Neural and Electronic Networks", Resistive Networks for Computer Vision, Editions S. F. Zornetzer, J.C. Davis & C. Lau, Academic Press, 1989. Un tel circuit fait appel à un transfert partiel des charges aux divers noeuds du capteur par une répartition judicieuse d'électrodes.

Un tel circuit présente cependant l'inconvénient de ne pas traiter aisément une image bidimensionnelle : en effet il impose de réaliser tout d'abord la convolution selon l'un des axes, puis de mémoriser le résultat dans une mémoire analogique indépendante du capteur lui-même, et enfin de réaliser la convolution selon l'autre axe.

Il est également difficile avec ce convolueur binomial d'obtenir une gaussienne de variance raisonnablement faible. Enfin et surtout, le convolueur réalisé selon cette technique n'est pas récursif, et l'on aboutit donc à des phénomènes indésirables de repliement du spectre.

Le document US-A-4 555 770 décrit un procédé et un dispositif pour effectuer des opérations de convolution sur un ensemble de pixels d'une image par une matrice des éléments CCD.

Le procédé décrit dans US-A-4 555 770, qui est de type analogique, utilise le mixage des paquets des charges d'une façon contrôlée.

La présente invention vise à pallier ces inconvénients de la technique antérieure.

L'invention sera réalisée selon les revendications indépendantes 1 et 3 ci-jointes.

Elle propose à cet effet un procédé pour effectuer des opérations récursives de convolution notamment bidimensionnelle et de type gaussien sur un ensemble de pixels d'une image, chaque pixel étant représenté par une tension électrique, caractérisé en ce qu'il comprend les étapes suivantes :

a) on applique lesdites tensions électriques aux bornes d'une pluralité de premiers condensateurs dont des premières bornes sont reliées à un potentiel de référence et dont des secondes bornes constituent une pluralité de noeuds d'un réseau et sont électriquement isolées les unes des autres,

b) on connecte ensemble pendant une durée prédéterminée les noeuds immédiatement adjacents selon la ou les directions du réseau via des seconds condensateurs, non chargés,

c) on isole à nouveau les uns des autres les noeuds du réseau et l'on décharge les seconds condensateurs,

d) on réitère les étapes b) et c), et

e) on relève les nouvelles tensions électriques présentes aux noeuds du réseau, représentatives des pixels d'une image convoluée.

L'invention concerne également un dispositif pour la mise en oeuvre du procédé tel que défini ci-dessus, caractérisé en ce qu'il comprend, en combinaison :

- un réseau de premiers condensateurs, dont une première borne est reliée à un potentiel de référence commun et dont une seconde borne est apte à recevoir une tension électrique représentative d'un pixel d'image,
- un ensemble de seconds condensateurs respectivement associés à chaque paire adjacente, selon la ou les directions du réseau, de premiers condensateurs,
- des moyens interrupteurs commandés capables, pendant une première période prédéterminée, de connecter les bornes de chaque second condensateur aux secondes bornes de la paire associée de premiers condensateurs et, pendant une seconde période prédéterminée faisant suite à la première, d'isoler lesdites secondes bornes de la paire associée de premiers condensateurs et de court-circuiter ensemble les bornes de chaque second condensateur.

On réalise ainsi une convolution dont la réponse peut être très proche d'une gaussienne, avec des moyens techniquement simples et faciles à mettre en place dans un circuit à semi-conducteurs à très haute échelle d'intégration. On réalise également une convolution récursive qui, par un choix du nombre d'itérations, permet de contrôler très précisément la variance.

Le convolueur selon la présente invention présente la propriété de résoudre l'équation de la chaleur, dont la réponse impulsionnelle peut être considérée comme une gaussienne, dès que la ou les dimensions du réseau sont suffisamment grandes et dès que le nombre d'itérations est suffisant.

D'autres aspects, buts et avantages de la présente invention apparaîtront mieux à la lecture de la description détaillée suivante de modes de réalisation préférés de celle-ci, donnée à titre d'exemple et faite en référence aux dessins annexés, sur lesquels :

les figures 1a et 1b représentent un circuit de convolution analogique à une dimension selon la présente invention, dans deux états différents,

les figures 2a et 2b représentent un circuit de convolution analogique à deux dimensions selon la présente invention, dans deux états différents,

la figure 3 représente une cellule d'un circuit de convolution analogique à une dimension selon une forme de réalisation concrète de la présente invention,

la figure 4 représente une cellule d'un circuit de convolution analogique à deux dimensions selon une forme de réalisation concrète de la présente invention,

la figure 5 indique graphiquement des caractéristiques de la réponse obtenue par rapport à une gaussienne parfaite, et

la figure 6 indique graphiquement une pluralité de réponses obtenues, en fonction du nombre d'itérations réalisées.

On notera préliminairement que, d'une figure à l'autre, des éléments ou parties identiques ou similaires sont désignés dans la mesure du possible par les mêmes signes de référence.

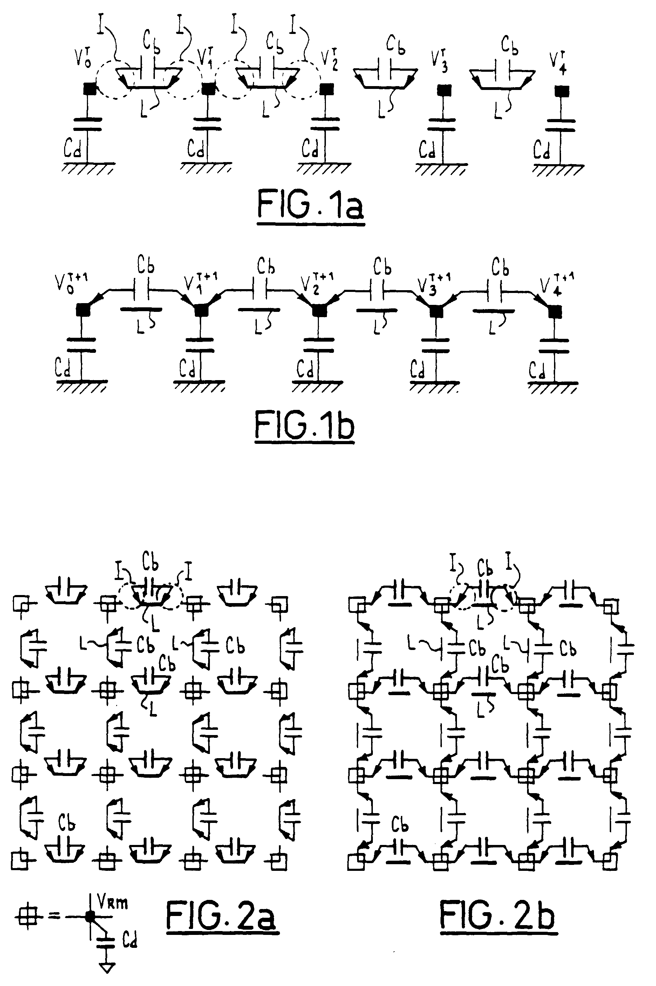

En référence tout d'abord aux figures 1a et 1b, on a représenté un réseau monodimensionnel qui comprend une pluralité de capacités dites horizontales Cb et une pluralité de capacités dites verticales Cd. Des premières bornes des capacités Cd sont toutes reliées à un potentiel de référence, en particulier à la masse.

On suppose ici que les capacités Cd présentent à leurs bornes, à un premier instant T, différentes tensions analogiques notées $V_0^T$ à $V_N^T$.

Chaque capacité horizontale Cb s'étend entre les deuxièmes bornes de deux capacités verticales adjacentes. une pluralité de commutateurs à deux positions I sont prévus respectivement entre chaque borne d'une capacité horizontale Cb et chaque deuxième borne adjacente d'une capacité verticale Cd.

Sous l'action d'impulsions de commandes appropriées, les commutateurs I peuvent prendre soit la position illustrée sur la figure 1a, soit la position illustrée sur la figure 1b.

Le comportement du circuit des figures 1a est le suivant : au repos (figure 1a), les secondes bornes des capacités verticales Cd sont isolées, et les tensions $V_0^T$ à $V_N^T$ sont conservées. Les commutateurs I reçoivent des tensions de commande qui les placent dans la position illustrée. Dans cette position, des liaisons de court-circuitage L prévues en association avec chaque capacité horizontale assurent la décharge complète, par l'intermédiaire des deux commutateurs I adjacents, desdites capacités horizontales.

A un instant déterminé et pendant une durée déterminée, un signal de commande est appliqué simultanément aux commutateurs I pour les faire basculer dans la position illustrée sur la figure 1b. Dans cet état, les charges contenues dans les capacités verticales tendent à s'équilibrer, si bien que les tensions vont se diffuser dans le réseau, selon une loi exponentielle, vers les capacités verticales voisines à travers les capacités horizontales, et les tensions $V_0^T$ à $V_N^T$ vont varier progressivement.

Au moment où, à l'instant T+1, les commutateurs I sont ramenés dans la position de la figure 1a, de nouvelles tensions $V_0^{T+1}$ à $V_N^{T+1}$ sont présentes sur les capacités verticales, et ces tensions sont alors conservées, pendant que l'ensemble des capacités horizontales sont court-circuitées sur elles-mêmes afin de vider les charges acquises au cours de la diffusion.

Ensuite, de nouvelles itérations sont réalisées comme décrit ci-dessus, pour faire à nouveau varier les tensions sur le réseau.

On notera que la longueur de diffusion des tensions $V_0^T$ à $V_N^T$ est conditionnée par le rapport entre les valeurs des capacités Cb et Cd, d'une manière analogue à un réseau analogique résistif.

On observe que les capacités Cb jouent simplement le rôle de chemins de transfert des charges dans le réseau, et qu'après un cycle complet tel que décrit ci-dessus, la somme des charges dans ces capacités est nulle, si bien que la charge initiale, stockée dans l'ensemble des capacités Cd, est conservée. Cela signifie concrètement que la surface du noyau de convolution réalisée à l'aide de ce réseau reste unitaire quel que soit le nombre d'itérations. Une telle propriété est capitale notamment dans une application particulière de l'invention, à savoir le filtrage de type DOX (différence entre gaussiennes).

On notera en outre que le réseau capacitif ci-dessus constitue un système linéaire, qui peut donc être entièrement caractérisé par sa réponse impulsionnelle.

On va maintenant démontrer comment, après un nombre d'itérations suffisant, la réponse du réseau représenté sur les figures 1a et 1b peut être assimilée avec une très bonne approximation à une gaussienne.

La tension à un noeud du réseau étant dénommée $V_n^T$, on peut écrire pour chaque noeud l'équation (1) ci dessous, basée sur le principe de la conservation de la charge :

$$C_d V_n^{T+1} + C_b + (V_n^{T+1} - V_{n-1}^{T+1}) + C_b (V_n^{T+1} - V_{n+1}^{T+1}) = C_d V_n^T \qquad (1)$$

Cette même équation peut être exprimée sous la forme suivante :

$$(V_{n-1}^{T+1} + V_{n+1}^{T+1} - 2V_n^{T+1}) = \frac{C_d}{C_b} (V_n^{T+1} - V_n^T) \qquad (2)$$

L'équation de chaleur étant la suivante :

$$\frac{\partial^2 V}{\partial x^2} = D \frac{\partial V}{\partial t} \qquad D = \frac{Cd}{Cb} \qquad (3a)$$

on observe que l'équation (2) est une approximation implicite à différence finie de l'équation de chaleur (3a) dans laquelle le coefficient de diffusion D serait égal au rapport entre les valeurs des capacités Cd et Cb.

La réponse impulsionnelle de l'équation (3a) est de façon bien connue une gaussienne dont la variance est donnée par :

$$Ò^2 = \frac{2t}{D} \qquad (3b)$$

Sur un plan purement mathématique, l'équation (2) ci-dessus, à différence finie, est absolument stable, c'est à dire que l'erreur de troncature tend vers zéro à mesure que le nombre d'itérations augmente.

On démontre donc que le réseau capacitif des figures 1a et 1b va fournir un noyau gaussien de bonne qualité dès que le nombre d'itérations sera suffisamment grand. On pourrait démontrer par calcul que l'erreur entre la réponse de l'équation de chaleur et la réponse effectivement obtenue est de l'ordre de 5% pour dix itérations.

On a illustré sur les figures 2a et 2b un réseau analogue à celui des figures 1a et 1b, mais à deux dimensions.

La signification du symbole présent à chaque noeud du réseau est indiqué en bas et à gauche de la figure 2a.

Les capacités horizontales et verticales, les liaisons de court-circuitage et les commutateurs commandés sont désignés par les mêmes références.

Le fonctionnement est tout à fait analogue à celui du circuit des figures 1a et 1b, à ceci près que la diffusion des tensions aux noeuds se produit, pendant les phases illustrées par la figure 2, dans les deux directions du réseau.

Si l'on désigne par $V_{n,m}{}^T$ la tension du noeud de coordonnées (n,m), on peut écrire une équation de conservation de la charge analogue à l'équation (1) indiquée plus haut. C'est l'équation (4) ci-dessous :

$$C_d V_{n,m}{}^{T+1} + C_b(V_{n,m}{}^{T+1} - V_{n-1,m}{}^{T+1}) + C_b(V_{n,m}{}^{T+1} - V_{n+1,m}{}^{T+1})$$
$$+ C_b(V_{n,m}{}^{T+1} - V_{n,m-1}{}^{T+1}) + C_b(V_{n,m}{}^{T+1} - V_{n,m+1}{}^{T+1})$$
$$= C_d(V_n{}^T \tag{4}$$

Comme dans le cas précédent, cette équation est une approximation implicite à différence finie de l'équation de chaleur, mais sur une surface bidimensionnelle. L'équation de chaleur en deux dimensions est la suivante :

$$D \left( \frac{\partial^2 V}{\partial x^2} + \frac{\partial^2 V}{\partial y^2} \right) = \frac{\partial V}{\partial t} \qquad D = \frac{Cb}{Cd} \tag{5}$$

Comme dans le cas du réseau à une dimension, l'équation (4) ci-dessus, à différence finie, est absolument stable, c'est à dire que l'erreur de troncature tend vers zéro à mesure que le nombre d'itérations augmente.

On démontre donc également que le réseau capacitif des figures 2a et 2b va fournir un noyau gaussien de bonne qualité dès que le nombre d'itérations sera suffisamment grand.

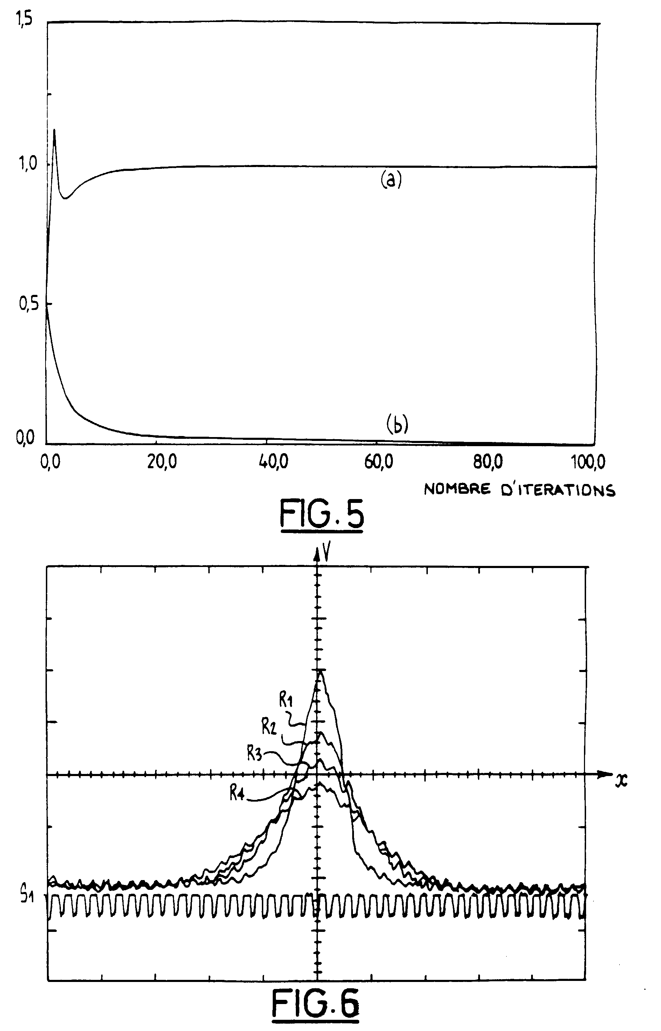

Le nombre d'itérations minimal pour atteindre cette qualité peut être déterminé par calcul numérique. A cet égard, la figure 5 des dessins montre dans sa partie supérieure (courbe (a)) la variance de la réponse calculée en fonction du nombre d'itérations, et dans sa partie inférieure (courbe (b)) l'erreur accumulée entre la variance calculée présentée dans la courbe (a) et la variance théorique déduite de l'équation (4), après normalisation.

On observe sur la figure 5 que, dès que le nombre d'itérations dépasse vingt (soit deux fois plus que dans le cas d'un réseau à une dimension), l'erreur est réduite à moins de 5%. Ainsi, pour vingt itérations et au delà, la variance de la réponse impulsionnelle réellement obtenue peut être considérée avec une bonne approximation comme la variance théorique déduite de l'équation de chaleur (5).

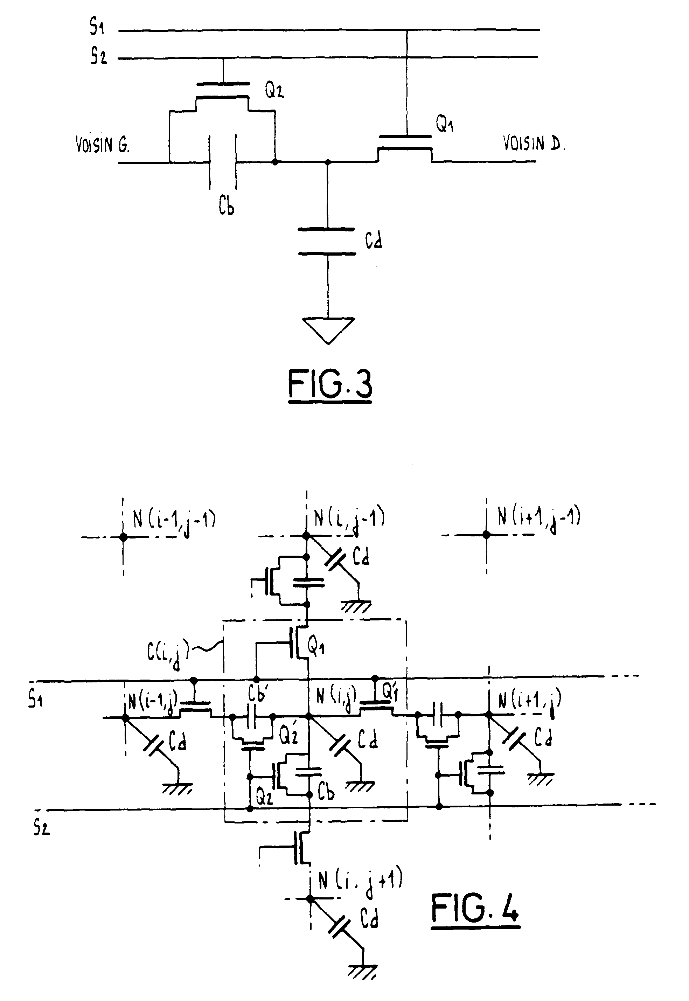

On va maintenant décrire en référence à la figure 3 une réalisation concrète possible d'une cellule d'un réseau capacitif à une dimension en technologie C-MOS.

La première borne de la capacité verticale Cd est reliée à la masse, tandis que sa deuxième borne est reliée d'une part à la cellule voisine située immédiatement à l'est par l'intermédiaire d'un transistor MOS Q1, et d'autre part à une première borne d'un montage en parallèle d'une capacité horizontale Cb et d'un autre transistor MOS Q2. La deuxième borne de ce montage parallèle est reliée à la cellule voisine située immédiatement à l'ouest.

La grille de Q1 est reliée à un bus véhiculant un signal de commande S1 constitué par une succession d'impulsions à fréquence déterminée. La grille de Q2 est reliée à un bus véhiculant un signal de commande S2 constitué par une succession d'impulsions de même fréquence, intercalées dans le temps entre les impulsions du signal S1.

Dans la phase de repos est définie par les périodes où le signal S1 ne délivre aucune impulsion. Tous les transistors Q1 sont bloqués, et les noeuds du réseau sont isolés les uns des autres.

Pendant au moins une partie de ces périodes, une impulsion est fournie par le signal S2 à chaque transistor Q2, qui se sature et court-circuite les bornes du condensateur Cb associé, pour complètement le décharger.

Dans la phase de diffusion des tensions, chaque transistor Q2 est bloqué pendant que chaque transistor Q1 est saturé pendant une certaine durée. On réalise ainsi un chemin de transfert de charges entre les noeuds voisins via les condensateurs Cb.

Le circuit de la figure 4 illustre la réalisation d'un réseau capacitif bidimensionnel en technologie C-MOS.

Chaque cellule C(i,j) du réseau comprend un noeud N(i,j) du réseau, et la capacité verticale associée Cd entre ce noeud et la masse.

Les transistors MOS Q1 et Q1' relient le noeud N(i,j) respectivement à la cellule associée au noeud N(i,j-1) situé immédiatement au nord, et à la cellule associée au noeud N(i+1,j) situé immédiatement à l'est.

Le noeud N(i,j) est par ailleurs relié à la cellule associée au noeud N(i,j+1) situé immédiatement au sud via le montage parallèle d'une capacité horizontale Cb et d'un transistor MOS Q2, et à la cellule associée au noeud N(i-1,j) situé immédiatement à l'ouest via le montage parallèle d'une autre capacité horizontale Cb et d'un transistor MOS Q2'.

Les transistors Q1 et Q1' sont commandés par le signal impulsionnel S1, tandis que les transistors Q2et Q2' sont commandés par le signal impulsionnel S2.

Le fonctionnement est semblable à celui du circuit de la figure 3, à ceci près que les tensions diffusent simultanément selon les deux directions du réseau.

On observera ici que, dans les modes de réalisation concrets des figures 3 et 4, on minimise le nombre d'éléments de commutation nécessaires.

On notera par ailleurs que le chargement des tensions initiales à convoluer sur les différents noeuds du réseau peut s'effectuer par toute technique de commutation classique. De même, le prélèvement des nouvelles tensions après itérations peut se faire par des techniques de commutation appropriées.

On mentionnera cependant ici le cas où la source des images est constituée par un matrice de photodiodes constituant un imageur MOS.

Dans ce cas, les capacités verticales Cd sont remplacées par les photodiodes elles-mêmes, dont la capacité de jonction est suffisante pour qu'elles jouent, après exposition aux photons, le même rôle que lesdites capacités verticales.

On observera que, dans les deux modes de réalisation concrets en technologie C-MOS décrits ci-dessus ne présentent pas les défauts courants des circuits C-MOS dynamiques, à savoir l'injection de charge et les bruits de commutation.

Pour ce qui concerne l'injection de charge, ce problème se pose uniquement quand le circuit travaille simultanément dans plusieurs domaines, et par exemple dans les domaines de charge et de tension ou dans les domaines de charge et de courant. Les réseaux C-MOS selon la présente invention travaillant uniquement dans le domaine de la charge, le problème n'existe donc pas.

Par ailleurs, de façon classique, les bruits de commutation proviennent de la diaphonie entre signaux, et soulèvent des difficultés particulièrement critiques dans les circuits où les signaux de sortie doivent être constamment échantillonnés. Mais dans les circuits de la présente invention, les nouvelles tensions aux noeuds peuvent être échantillonnées en arrêtant les signaux d'horloge S1 et S2. En d'autres termes, les phases d'itération et les phases d'échantillonnage (application et prélèvement des tensions) se font en alternance. Il n'existe donc pas de bruits de commutation gênants.

La figure 6 illustre la réponse d'un circuit prototype réalisé selon la présente invention. Un circuit de 48x48 pixels a été réalisé en technologie C-MOS, les capteurs de lumière étant réalisés sous forme de photodiodes C-MOS intégrées au circuit. Les images d'origine et après convolutions ont été lues avec un scanneur analogique en mode courant. Un convertisseur courant-tension relié à la sortie du scanneur a converti les informations en une tension analogique V appliquée à un oscilloscope, qui a restitué ce qui est montré sur la figure 6.

On peut observer sur cette figure plusieurs réponses (courbes R1 à R4), correspondant chacune à un nombre différent d'itérations (aucune itération pour la courbe R1). On observe également l'un des signaux d'horloge S1.

La figure 6 confirme le résultat attendu, à savoir l'obtention d'une réponse quasi-gaussienne dès que le nombre d'itérations devient suffisant, avec une variance qui croît progressivement.

On observera enfin que des convolueurs capacitifs selon la présente invention, du fait de leur récursivité, permettent d'éviter tout phénomène de repliement du spectre constaté dans certaines réalisations de l'art antérieur et lié à l'utilisation d'un noyau de convolution de petites dimensions.

La présente invention trouve application dans de nombreux domaines tels que le lissage d'images et l'élimination du bruit, la détection de contours et de mouvements.

## Revendications

1. Procédé pour effectuer des opérations récursives de convolution notamment bidimensionnelle de type gaussien sur un ensemble de pixels d'une image, chaque pixel étant représenté par une tension électrique, caractérisé en ce qu'il comprend les étapes suivantes :

   a) on applique lesdites tensions électriques aux bornes d'une pluralité de premiers condensateurs (Cd) dont des premières bornes sont reliées à un potentiel de référence et dont des secondes bornes constituent une pluralité de noeuds (N(i,j)) d'un réseau et sont électriquement isolées les unes des autres,
   b) on connecte ensemble pendant une durée prédéterminée les noeuds immédiatement adjacents selon la ou les directions du réseau via des seconds condensateurs (Cb), non chargés,

**EP 0 603 070 B1**

c) on isole à nouveau les uns des autres les noeuds du réseau et l'on décharge les seconds condensateurs,

d) on réitère les étapes b) et c), et

e) on relève les nouvelles tensions électriques présentes aux noeuds du réseau, représentatives des pixels d'une image convoluée.

2. Procédé selon la revendication 1, caractérisé en ce que les étapes b) et c) sont effectuées en appliquant des impulsions de commande à des moyens de commutation (I) reliés d'une part aux bornes de chaque second condensateur (Cb) et d'autre part, sélectivement, soit à une seconde borne d'un premier condensateur associé (Cd), soit à une liaison de court-circuitage (L) associée au second condensateur considéré.

3. Dispositif pour la mise en oeuvre du procédé selon la revendication 1, caractérisé en ce qu'il comprend, en combinaison :

- un réseau de premiers condensateurs (Cd), dont une première borne est reliée à un potentiel de référence commun et dont une seconde borne est apte à recevoir une tension électrique représentative d'un pixel d'image,
- un ensemble de seconds condensateurs (Cb) respectivement associés à chaque paire adjacente, selon la ou les directions du réseau, de premiers condensateurs,
- des moyens interrupteurs commandés (Q1, Q2; Q1, Q1', Q2, Q2') capables, pendant une première période prédéterminée, de connecter les bornes de chaque second condensateur (Cb) aux secondes bornes de la paire associée de premiers condensateurs (Cd) et, pendant une seconde période prédéterminée faisant suite à la première, d'isoler lesdites secondes bornes de la paire associée de premiers condensateurs et de court-circuiter ensemble les bornes de chaque second condensateur (Cb).

4. Dispositif selon la revendication 3, caractérisé en ce que les premiers condensateurs sont constitués par la capacité de jonction de photodiodes, lesdites photodiodes étant aptes à engendrer lesdites tensions électriques représentatives des pixels d'image en réponse à la réception de photons constituant ladite image.

5. Dispositif selon l'une des revendications 3 et 4, caractérisé en ce que les moyens interrupteurs commandés comprennent des premiers interrupteurs commmandés (Q1, Q1') reliés chacun en série avec un second condensateur associé et des seconds interrupteurs commandés (Q2, Q2') reliés chacun en parallèle avec un second condensateur associé.

6. Dispositif selon la revendication 5, caractérisé en ce qu'il est prévu en outre des moyens générateurs d'impulsions pour engendrer des premières impulsions de fermeture des premiers interrupteurs (Q1, Q1') pendant lesdites premières périodes de temps et pour engendrer des secondes impulsions de fermeture des seconds interrupteurs (Q2, Q2') pendant lesdites secondes périodes de temps.

7. Dispositif selon l'une des revendications 5 et 6, caractérisé en ce que les premiers et seconds condensateurs et les premiers et seconds interrupteurs sont réalisés en technologie C-MOS sur un même substrat semi-conducteur.

**Patentansprüche**

1. Verfahren für die Durchführung von rekursiven Operationen der insbesondere zweidimensionalen Bildfaltung der Gaußschen Art an einer Anzahl von Pixeln eines Bildes, wobei jedes dieser Pixel durch eine elektrische Spannung repräsentiert wird,
**dadurch gekennzeichnet, daß**
es folgende Arbeitsschritte um faßt:

a) die elektrischen Spannungen werden auf die Anschlußklemmen einer Vielzahl von ersten Kondensatoren (Cd) beaufschlagt, bei denen die ersten Anschlußklemmen an ein Referenzpotential angeschlossen sind, und bei denen die zweiten Anschlußklemmen eine Vielzahl von Knoten (N(i,j)) eines Netzes bilden und gegeneinander elektrisch isoliert sind,

b) mit Hilfe von nicht aufgeladenen zweiten Kondensatoren (Cb) werden für eine bestimmte Zeitdauer die unmittelbar benachbarten Knoten in der einen oder beiden Richtungen des Netzes miteinander verbunden,

c) die Knoten des Netzes werden erneut isoliert und die zweiten Kondensatoren werden entladen,

d) die Etappen b) und c) werden wiederholt, und

7

e) die neuen elektrischen Spannungen, die in den Knoten des Netzes vorhanden und für die Pixel eines gefalteten Bildes repräsentativ sind, werden gemessen.

**2.** Verfahren nach Anspruch 1,
**dadurch gekennzeichnet, daß**
die Etappen b) und c) dadurch durchgeführt, werden, daß man Steuerimpulse auf Umschaltmittel (I) beaufschlagt, die einerseits an die Anschlußklemmen der jeweiligen zweiten Kondensatoren (Cb) und andererseits, wahlweise, entweder an eine zweite Anschlußklemme eines ersten zugeordneten Kondensators (Cd) oder an eine Kurzschlußleitung (L) angeschlossen sind, die dem zweiten Kondensator zugeordnet ist.

**3.** Vorrichtung für die Durchführung des Verfahrens nach Anspruch 1,
**dadurch gekennzeichnet, daß**
sie in Kombination folgendes aufweist:

- ein Netz aus ersten Kondensatoren (Cd), bei denen eine erste Anschlußklemme an ein gemeinsames Referenzpotential angeschlossen ist, und eine zweite Anschlußklemme eine elektrische Spannung aufnehmen kann, welche für ein Pixel eines Bildes repräsentativ ist,
- eine Anordnung aus zweiten Kondensatoren (Cb), die jeweils an das benachbarte Paar in der einen oder anderen Richtungen des Netzes aus ersten Kondensatoren angeschlossen sind,
- gesteuerte Unterbrecher (Q1, Q2; Q1, Q1', Q2, Q2'), die für eine bestimmte Zeitdauer die Anschlußklemmen der zweiten Kondensatoren (Cb) an die zweiten Anschlußklemmen des entsprechenden Paares der ersten Kondensatoren (Cd) anschließen, und während einer zweiten vorbestimmten Zeitdauer, die an die erste anschließt, die zweiten Anschlußklemmen gegen das Paar erster Kondensatoren isolieren und die Anschlußklemmen der zweiten Kondensatoren (Cb) kurzschließen.

**4.** Vorrichtung nach Anspruch 3,
**dadurch gekennzeichnet, daß**
die ersten Kondensatoren aus der Anschlußkapazität von Photodioden bestehen, wobei diese Photodioden geeignet sind, die elektrischen Spannungen zu erzeugen, welche für die Bildpixel repräsentativ sind, und zwar als Reaktion auf den Empfang von Photonen, aus denen das Bild besteht.

**5.** Vorrichtung nach einem der Ansprüche 3 und 4,
**dadurch gekennzeichnet, daß**
die gesteuerten Unterbrechermittel erste gesteuerte Unterbrecher (Q1, Q1') aufweisen, die jeweils mit einem zweiten zugeordneten Kondensator in Reihe geschaltet sind, sowie zweite gesteuerte Unterbrecher (Q2, Q2') aufweisen, die jeweils parallel mit einem zweiten zugeordneten Kondensator verbunden sind.

**6.** Vorrichtung nach Anspruch 5,
**dadurch gekennzeichnet, daß**
außerdem Mittel für die Erzeugung von Impulsen vorgesehen sind, um erste Impulse für die Schließung der ersten Unterbrecher (Q1, Q1') während den ersten genannten Zeiträumen zu erzeugen, und um zweite Impulse für die Schließung der zweiten Unterbrecher (Q2, Q2') während der zweiten Zeitdauer zu erzeugen.

**7.** Vorrichtung nach einem der Ansprüche 5 und 6,
**dadurch gekennzeichnet, daß**
die ersten und zweiten Kondensatoren und die ersten und zweiten Unterbrecher nach der CMOS-Technologie auf einem einzigen Halbleitersubstrat hergestellt sind.

**Claims**

**1.** Process for performing recursive especially two-dimensional convolution operations of Gaussian type on a set of pixels of an image, each pixel being represented by an electrical voltage, characterized in that it comprises the following steps:

a) the said electrical voltages are applied to the terminals of a plurality of first capacitors (Cd), first terminals of which are connected to a reference potential and second terminals of which constitute a plurality of nodes (N(i,j)) of a network and are electrically insulated from one another,

b) the nodes which are immediately adjacent in the direction or directions of the network are connected together for a predetermined duration, via second, uncharged, capacitors (Cb),

c) the nodes of the network are insulated from one another anew and the second capacitors are discharged,

d) steps b) and c) are repeated, and

e) the new electrical voltages which are present at the nodes of the network and are representative of the pixels of a convolved image are read out.

2. Process according to Claim 1, characterized in that steps b) and c) are performed by applying control pulses to switching means (I) connected on the one hand to tne terminals of each second capacitor (Cb) and on the other hand, selectively, either to a second terminal of a first associated capacitor (Cd) or to a short-circuiting link (L) associated with the seccnd relevant capacitor.

3. Device for implementing the process according to Claim 1, characterized in that it comprises, in combination:

- a network of first capacitors (Cd), a first terminal of which is connected to a common reference potential and a second terminal of which is able to receive an electrical voltage representative of an image pixel,
- a set of second capacitors (Cb) respectively associated with each adjacent pair, according to the direction or directions of the network, of first capacitors,
- controlled interrupter means (Q1, Q2; Q1, Q1', Q2, Q2') capable, for a first predetermined period, of joining up the terminals of each second capacitor (Cb) to the second terminals of the associated pair of first capacitors (Cd) and, for a second predetermined period following on from the first, of insulating the said second terminals from the associated pair of first capacitors and of short-circuiting together the terminals of each second capacitor (Cb).

4. Device according to Claim 3, characterized in that the first capacitors are constituted by the junction capacitance of photodiodes, the said photodiodes being able to generate the said electrical voltages representative of the image pixels in response to the receiving of photons constituting the said image.

5. Device according to either of Claims 3 or 4, characterized in that the controlled interrupter means comprise first controlled interrupters (Q1, Q1') each connected in series with a second associated capacitor and second controlled interrupters (Q2, Q2') each connected in parallel with a second associated capacitor.

6. Device according to Claim 5, characterized in that there is furthermore provision for pulse generating means for producing first pulses for closing the first interrupters (Q1, Q1') for the said first time periods and for producing second pulses for closing the second interrupters (Q2, Q2') for the said second time periods.

7. Device according to either of Claims 5 or 6, characterized in that the first and second capacitors and the first and second interrupters are produced with C-MOS technology on the same semiconductor substrate.

FIG.1a

FIG.1b

FIG.2a

FIG.2b

FIG.3

FIG.4

FIG.5

NOMBRE D'ITERATIONS

FIG.6